# DEMANDE DE BREVET EUROPEEN

(11) **EP 0 962 405 A1**
(43) Date de publication de la demande: **08.12.1999**
(21) Numéro de dépôt: 99420126.7
(22) Date de dépôt: 28.05.1999
(51) Int. Cl.: B65G 7/12

(54) **Appareil de manutention pour le transport manuel de charges**

(30) Priorité: 03.06.1998 FR 9807142
(71) Demandeur: Rosier, Jean-Bernard, 03150 Varennes sur Allier (FR)
(72) Inventeur: Rosier, Jean-Bernard, 03150 Varennes sur Allier (FR)
(74) Mandataire: Thivillier, Patrick

(57) **Abrégé**

Cet appareil est remarquable en ce qu'il comprend deux bras (1) et (2) faisant office de leviers assujettis à un système de sangles (3)-(4) et (5)-(6) et (9) conformées pour être passées sous l'objet à transporter et être mises en tension lorsque lesdits bras (1) et (2) sont soulevées, lesdits bras (1) et (2) présentant des zones d'appui aptes à coopérer, après mise en tension des sangles (3)-(4) et (5)-(6) et (9), avec une partie de l'objet à transporter.

## Description

L'invention se rattache au secteur technique des moyens de manutention pour le déplacement et le transport de produits et d'articles divers.

Il est souvent nécessaire, dans la vie courante, de déplacer et de transporter des articles divers tels que meubles, réfrigérateurs, machines à laver... correspondant à des périodes de déménagements, livraisons ou tout simplement de réaménagement à l'intérieur d'un local considéré. Certains de ces articles sont relativement lourds, de sorte qu'il est très difficile, voir impossible, de les déplacer. Les difficultés sont encore accentuées lorsque l'article considéré ne présente pas des agencements permettant sa préhension. Des risques d'accidents aussi bien au niveau des personnes que des biens corporels ne sont donc pas à exclure.

Pour tenter de remédier à ces inconvénients, on a proposé de disposer, par exemple sous les pieds de l'article considéré, des patins glissants afin de pouvoir déplacer l'article en le poussant et/ou en le tirant. Cette solution n'est pas très efficace et surtout ne peut être utilisée qu'à l'intérieur du local où se trouve l'article à déplacer et ne peut être appliquée à tous les types de revêtement de sol.

On peut citer également l'enseignement du brevet FR 2.625.735 qui divulgue un brancard multi-fonctions sous forme de deux bras reliés par des chaînes. Cette solution est limitée au transport d'objets particuliers du type sacs, parpaings, ..., ne présentant pas un volume important et une forme géométrique très définie. Notamment ce brancard n'est pas applicable pour le déplacement et/ou le transport de meubles.

L'invention s'est fixée pour but de remédier à ces inconvénients, de manière simple, sûre, efficace et rationnelle.

Le problème que se propose de résoudre l'invention, est de pouvoir facilement soulever une charge et la déplacer dans un endroit quelconque, avec le minimum d'effort, étant bien entendu, que ces opérations de soulèvement et de déplacement s'effectuent d'une manière entièrement manuelle, en ne nécessitant aucune source d'énergie extérieure.

Le problème posé est donc de réaliser un appareil simple, peu encombrant, d'application quasi universelle, et d'un coût de revient réduit en ayant pour objectif d'obtenir un parfait centrage et une parfaite préhension de l'objet à transporter.

Pour résoudre de tels problèmes, il a été conçu et mis au point, selon les caractéristiques de l'invention, un appareil de manutention pour le transport manuel de charges qui comprend deux bras faisant office de leviers assujettis à un système de sangles conformées pour être passées sous l'objet à transporter et être mises en tension lorsque lesdits bras sont soulevées, les bras présentant des zones d'appui aptes à coopérer, après mise en tension des sangles, avec une partie de l'objet à transporter.

Pour résoudre le problème posé de pouvoir adapter l'appareil aux différentes dimensions d'objets, les zones d'appui sont constituées par des patins montés avec capacité de déplacement le long des bras support.

Pour résoudre le problème posé d'assurer la mise en tension des sangles au moment du soulèvement des bras, afin de permettre de manière concomitante, le soulèvement de l'objet considéré, le système de sangles est constitué par deux paires de brins délimitant sensiblement un V dont les extrémités libres sont reliées chacune à un bras, les sommets de chacun des V étant relié par un brin commun par un brin commun apte à être passé sous l'objet à transporter.

Un autre problème que se propose de résoudre l'invention est de pouvoir prééquiper l'objet à transporter de l'appareil de manutention. Pour résoudre un tel problème, les bras sont réunis par au moins un organe élastique de liaison apte à assurer leur rapprochement permanent en position d'appui des patins.

Pour résoudre le problème posé d'améliorer la prise de l'objet, le système de sangles est fixé au niveau des patins d'appui.

Pour résoudre le problème posé de pouvoir adapter l'appareil de manutention a tous types d'objets, les différents brins du système de sangles sont réglables en longueur. Les bras sont télescopiques pour être réglables en longueur.

Un autre problème que se propose de résoudre l'invention est de pouvoir transporter l'objet par une seule personne. Dans ce but, les extrémités des bras coopèrent, d'un côté, avec un système de roulettes d'appui au sol.

L'invention est exposée ci-après plus en détail à l'aide des figures des dessins annexés dans lesquels :
- la figure 1 est une vue en perspective de l'appareil.
- la figure 2 est une vue en perspective montrant la mise en place de l'appareil par rapport à un objet à transporter.
- la figure 3 est une vue en perspective correspondant à la figure 2, montrant le déplacement de l'objet.
- la figure 4 est une vue de côté montrant le transport d'un objet à la façon d'une brouette.

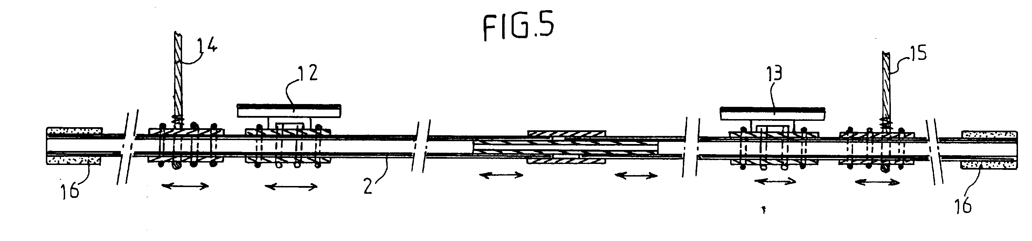

- la figure 5 est une vue partielle et en coupe considérée au niveau de l'un des bras de l'appareil.
- la figure 6 est une vue à caractère schématique montrant une variante de réalisation des organes de rappel élastique.

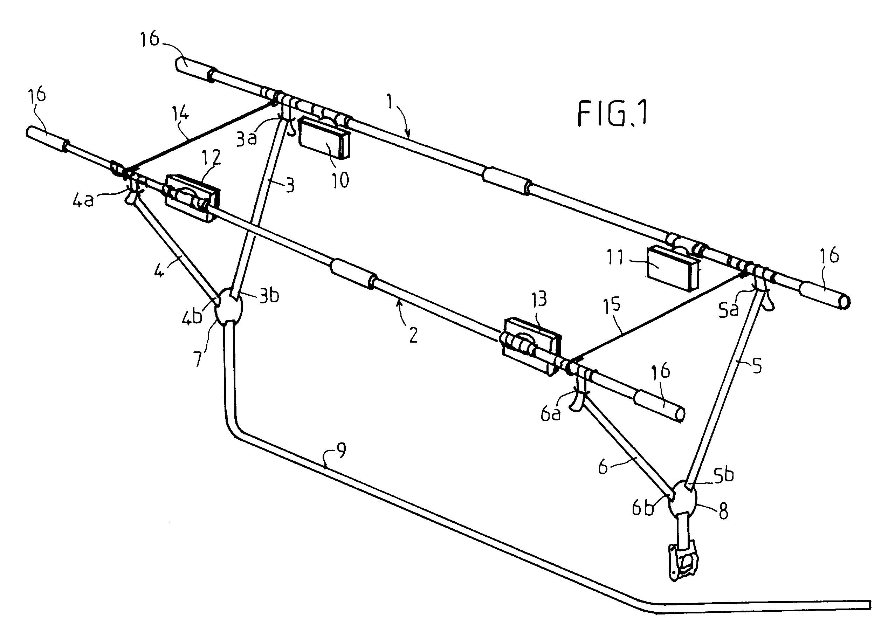

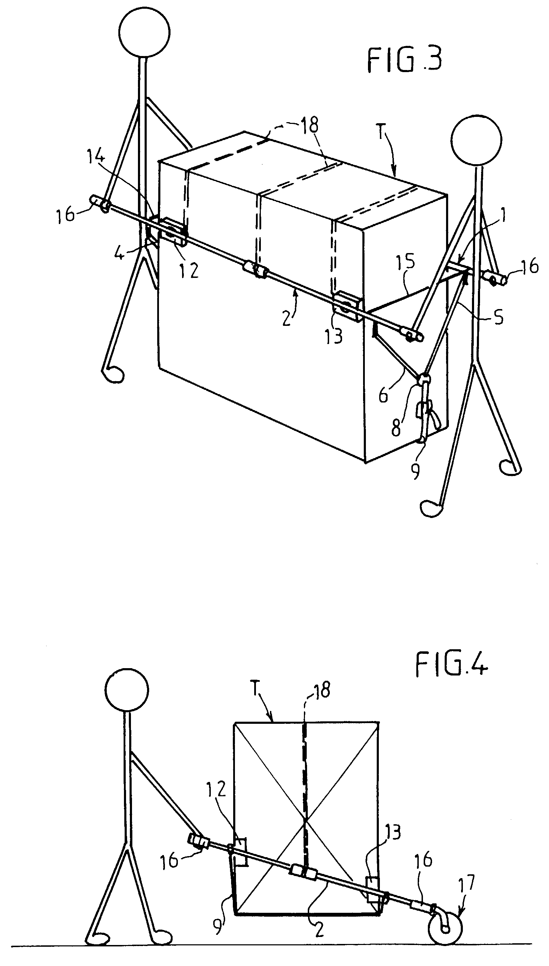

Comme le montre la figure 1, l'appareil comprend deux bras identiques (1) et (2) faisant office de levier. Les bras (1) et (2) sont assujettis à un système de sangles désigné dans son ensemble par (S), conformé pour être placé sous l'objet à transporter (T) et être mis en tension lorsque lesdits bras (1) et (2) sont soulevés, notamment à chacune de leurs extrémités par deux personnes (figure 3).

Plus particulièrement, le système de sangles comprend deux paires de brins (3)-(4) et (5)-(6) reliées par un brin commun (9).

Les extrémités libres (3a)-(4a) des brins (3)-(4), et les extrémités libres (5a)-(6a) des brins (5)-(6) sont reliées aux bras (1) et (2). Plus particulièrement, les extrémités (3a) et (5a) sont reliées au bras (1), tandis que les extrémités (4a) et (6a) sont reliées au bras (2). Les autres extrémités (3b) et (4b) de la paire de brins (3)-(4) sont reliées entre elles, de sorte que lesdits brins (3) et (4) délimitent sensiblement un V.

De même, les autres extrémités (5b) et (6b) de la paire de brins (5)-(6) sont reliées entre elles, de sorte que les brins (5) et (6) délimitent, de la même façon que les brins (3) et (4), sensiblement un V. Par exemple, les extrémités (3b) (4b) et (5b) (6b) sont raccordées à un anneau (7) et (8).

Les sommets des deux paires de brins (3) (4) et (5) (6) disposés en V, sont reliés par le brin commun (9). Dans l'exemple illustré, ce brin (9) relie les anneaux (7) et (8).

La liaison des brins (3) (4) et (5) (6) au niveau de leur extrémité de raccordement (3a) (4a) et (5a) (6a) avec les bras (1) et (2), s'effectue par tout moyen connu et approprié. Par exemple, cette liaison peut être effectuée au moyen d'une simple boucle ou au moyen d'un anneau. On prévoit de rendre réglable en position les zones de liaison (3a) (4a) et (5a) (6a) par rapport à la longueur des bras (1) et (2).

De même, chacun des brins (3)-(4), (5)-(6) et (9) sont en plusieurs parties reliées à tous système de boucles parfaitement connus, pour assurer une variation de longueur et un blocage en position.

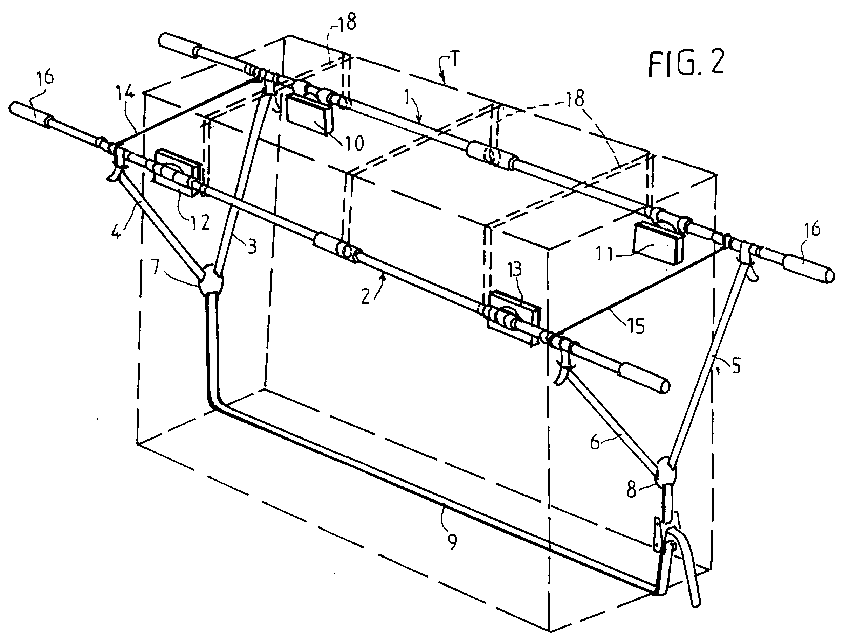

On prévoit également, pour palier à un éventuel manque de synchronisme entre les deux personnes, et susceptible de provoquer un déplacement vertical de l'un des bras par rapport à l'autre, de les relier au moyen de sangles supérieures (18) (tracés traits interrompus figure 2). Par exemple, on peut utiliser une seule sangle disposée au centre de l'appareil pour les objets courts, et deux sangles disposées aux extrémités des bras pour des objets longs, la ou les sangles entourant la partie supérieure de l'objet.

Suivant une autre caractéristique importante de l'invention, les bras présentent des patins d'appui (10), (11), (12) et (13) aptes à coopérer avec l'objet à transporter (T), après mise en tension du système de sangles (3)-(4), (5)-(6), (9). Chaque bras (1) et (2) présente deux patins d'appui (10)-(11) et (12)-(13), lesquels sont avantageusement montés au niveau de la proximité des zones de fixation (3a) (4a) et (5a) (6a) des brins (3)-(4) et (5)-(6). Les patins d'appui (10)-(11) et (12)-(13) sont montés avec capacité de déplacement le long des bras support correspondant (1) et (2), pour être déplacés de la même façon que les paires de brins (3) (4) et (5) (6), afin d'adapter l'ensemble du système de préhension aux dimensions de l'objet (T) à transporter. De même, les patins (10)-(11) et (12)-(13) peuvent être montés avec capacité d'orientation angulaire par rapport aux bras (1) et (2). La face d'appui des patins (10)-(11) et (12)-(13) présente tous types de matériaux, telle que de la mousse, conformée pour ne pas marquer et détériorer l'objet (T) à transporter. Le matériau est sélectionné pour être assez adhérent pour renforcer le maintien pendant le transport notamment dans les escaliers. Les patins peuvent être ronds ou rectangulaires.

Suivant une autre caractéristique de l'invention, les deux bras (1) et (2) sont réunis par au moins un organe élastique de liaison (14), apte à assurer leur rapprochement permanent en position d'appui des patins (10) (11) (12) (13).

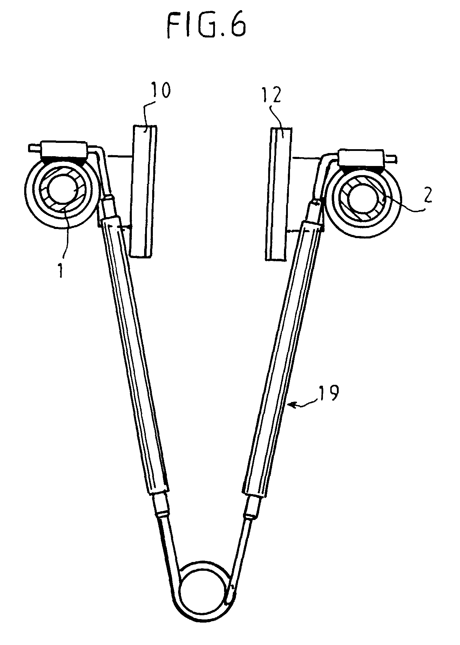

Avantageusement, l'appareil comprend deux organes élastiques de liaison (14) et (15) disposés au niveau des paires de patins (10)-(11) et (12)-(13). Lorsque les bras (1) et (2) sont écartés l'un de l'autre, les organes (14) et (15) sont mis en tension de sorte qu'après relâchement de l'effort appliqué sur chacun des bras (1) et (2), ces dernières sont ramenées en position de préhension sous l'effet de détente desdits organes (14) et (15). Les organes élastiques peuvent être constitués par des ressorts (19) du type en épingle reliés à coulissement sur les bras (1) et (2), comme le montre la figure 6.

Les bras (1) et (2) qui font office de leviers, sont réalisés au moyen de tubes de section ronde ou autres, exécutés dans différentes matières tels qu'acier, aluminium, matériaux composite...

Avantageusement, les bras (1) et (2) sont exécutés au moyen d'éléments télescopiques, afin de faire varier leur longueur. Chacune des extrémités des bras (1) et (2) sont équipées de poignées de préhension (16).

L'utilisation de l'appareil de manutention selon les caractéristiques de l'invention est particulièrement simple, sûre et efficace. Après avoir désaccouplé une partie du système de sangles (S), le brin de sangle (9) est placé sous l'objet (T) à transporter. Après avoir de nouveau réuni le système de sangles et les bras (1) et (2), il suffit de soulever ceux ci jusqu'à la mise en tension des différents brins du système de sangles. Bien évidemment, les différents brins (3)-(4) (5)-(6) et (9) et les patins (10 ), (11), (12) et (13) sont adaptés en longueur, en fonction des dimensions de l'objet (T) à transporter.

Comme le montre la figure 2, les organes élastiques de liaison (14) et (15) maintiennent en position de soulèvement et de transport, les bras (1) et (2), après mise en tension du système de sangles. Le réglage des sangles (3), (4), (5), (6), (9) permet de modifier la hauteur les bras (1) et (2) par rapport à l'utilisateur, pour le transport de l'objet (T) (figure 3). On voit également que les bras (1) et (2) peuvent être disposés dans un plan horizontal ou être inclinés, les sangles étant réglées en conséquence pour le transport de l'objet, dans des endroits inclinés, tels que des escaliers.

On observe également qu'il est possible d'équiper l'un des côtés au choix des extrémités des bras (1) et (2) notamment en position inclinée de ces derniers, d'un cadre d'appui au sol (17) équipé de roulettes permettant ainsi de déplacer l'ensemble de l'objet à la façon d'une brouette (figure 4).

Le cadre (17) peut simplement être emmanché en bout des extrémités libres des bras (1 et 2).

Les avantages ressortent bien de la description, en particulier on souligne et on rappelle :
- la simplicité et la facilité d'utilisation, avec un faible encombrement en position de non utilisation,
- la possibilité d'adapter l'appareil à des objets de formes et dimensions divers en jouant sur la longueur et la position des différents brins constituant le système de sangles,
- la facilité de soulèvement et de déplacement de l'objet au moyen des bras de l'appareil qui font office de levier,
- l'utilisation de l'appareil par des particuliers ou des professionnels.

## Revendications

1. Appareil de manutention pour le transport manuel de charges, caractérisé en ce qu'il comprend deux bras (1) et (2) faisant office de leviers assujettis à un système de sangles (3)-(4) et (5)-(6) et (9) conformées pour être passées sous l'objet à transporter et être mises en tension lorsque lesdits bras (1) et (2) sont soulevées, lesdits bras (1) et (2) présentant des zones d'appui aptes à coopérer, après mise en tension des sangles (3)-(4) et (5)-(6) et (9), avec une partie de l'objet à transporter.

2. Appareil selon la revendication 1, caractérisé en ce que les zones d'appui sont constituées par des patins (10)-(11)-(12) et (13) montés avec capacité de déplacement le long des bras support (1) et (2).

3. Appareil selon la revendication 1, caractérisé en ce que le système de sangles est constitué par deux paires de brins délimitant sensiblement un V dont les extrémités libres sont reliées chacune à un bras, les sommets de chacun des V étant reliés par un brin commun apte à être passé sous l'objet à transporter.

4. Appareil selon la revendication 3, caractérisé en ce que les différents brins (3)-(4) et (5)-(6) et (9) du système de sangles sont réglables en longueur.

5. Appareil selon la revendication 1, caractérisé en ce que les bras (1) et (2) sont télescopiques pour être réglables en longueur.

6. Appareil selon la revendication 1, caractérisé en ce que les bras (1) et (2) sont réunis par au moins un organe élastique de liaison (14) apte à assurer leur rapprochement permanent en position d'appui des patins (10)-(11)-(12) et (13).

7. Appareil selon l'une quelconque des revendications 1 et 2, caractérisé en ce que le système de sangles est fixé au niveau des patins d'appui (10)-(11)-(12) et (13).

8. Appareil selon la revendication 1, caractérisé en ce que les extrémités des bras (1) et (2) coopèrent, d'un côté, avec un cadre d'appui équipé de roulettes d'appui au sol.

9. Appareil selon la revendication 1, caractérisé en ce qu'il présente des sangles supérieures (18) aptes à relier les bras (1) et (2) en entourant la partie correspondante de l'objet.
